# EUROPEAN PATENT APPLICATION

(11) **EP 4 667 084 A1**
(43) Date of publication of application: **24.12.2025**
(21) Application number: 24200091.7
(22) Date of filing: 12.09.2024
(51) Int. Cl.: B01D 53/14, B01D 53/18, B01J 19/24

(54) **METHOD FOR CONTINUOUS CO2 ABSORPTION AND SOLVENT REGENERATION**

(30) Priority: 21.06.2024 PT 2024119538
(71) Applicant: ASSOCIAÇÃO NET4CO2- NETWORK FOR A SUSTAINABLE CO2 ECONOMY, 4200-355 Porto (PT)
(72) Inventor: DOS SANTOS COSTA, Marcelo Filipe, 3720-518 OLIVEIRA DE AZEMÉIS (PT); DA CRUZ COSTA, João Carlos, 4905-359 VIANA DO CASTELO (PT)
(74) Representative: Patentree

(57) **Abstract**

The present disclosure relates to a novel and improved method for the continuous carbon dioxide (CO₂) absorption from a gas stream using an amine solution as solvent, and regeneration of said solvent.

It is disclosed a method for continuous carbon dioxide absorption and solvent regeneration comprising the use of a plurality of reactors in series wherein each reactor comprises at least one reaction fluid distributor network for flowing one or more reaction fluids, wherein said reaction fluid distributor network comprises an array of chambers, each chamber being interconnected by at least two channels to at least two other chambers.

## Description

### Technical field

The present disclosure relates to a novel and improved method for the continuous carbon dioxide (CO₂) absorption from a gas stream using an amine solution as solvent, as well as regeneration of said solvent. The present disclosure also relates to a reactor for use in the method disclosed.

### Background

The increasing concentration of carbon dioxide (CO₂) in the atmosphere has emerged as one of the most pressing environmental issues of our time. As a major greenhouse gas, CO₂ contributes significantly to global warming and climate change, leading to severe ecological and socio-economic impacts. Industrial activities, such as power generation, chemical manufacturing, and petroleum refining, are substantial sources of CO₂ emissions, necessitating the development of efficient CO₂ capture technologies to mitigate their environmental footprint.

Under the Paris Agreement, the EU has presented a long-term strategy to mitigate CO₂ emissions, committing to reduce the European Union's emissions by at least 55% by 2030, compared to 1990 levels. Therefore, it is necessary and important to find solutions that promote Carbon Capture, Utilization, and Storage (CCUS) to reduce CO₂ emissions into the atmosphere.

Conventional CO₂ capture processes typically involve absorption techniques using packed or tray columns. In these processes, a gas stream containing CO₂ is contacted with a liquid solvent, usually an amine solution, which absorbs the CO₂. In this type of process, the aim is to increase the transfer area between the gas and the liquid in order to promote the transfer of CO₂ to the liquid stream.

The solvents used are usually aqueous solutions containing amines, which can be primary (MEA), secondary (DEA), tertiary (MDEA) or sterically hindered (PZ).

Primary and secondary amines have similar reaction with CO₂. A molecule of CO₂ reacts with an amine group, and form an ion zwitterion that is very unstable, and reacts with another amine group to form a carbamate, which is very stable. The overall equation of reaction of CO₂ with a primary/secondary amine is represented in following reaction.

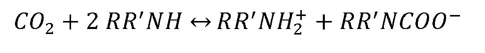

In the case of tertiary amines, the reaction takes place in a single step to produce bicarbonate ions. The reaction between the tertiary amine and CO₂ is shown below.

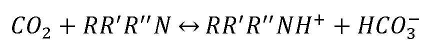

Due to the different types of reaction that occur between the different amine groups and CO₂, they have advantages and disadvantages over each other. Primary and secondary amines have faster absorption rates but have lower CO₂ absorption capacities compared to tertiary amines. The latter have lower enthalpies, which favors amine regeneration processes. Due to the characteristics of the different classes of amines, blends of amines are normally used in order to add the greatest value to each of them and thus increase the effectiveness and efficiency of capture.

The capture process generally presents some technical difficulties and challenges. The main problems relate to low mass transfer rates and high energy consumption in the regeneration stage, as well as problems related to corrosion.

The mass transfer limitations in absorption columns are due to the limited surface area available between the gas-liquid interface, which leads to a decrease in the transfer of CO₂ to the liquid. Due to the low mass transfer rates, it is common to have large columns (over 50 meters high), high capital costs and operation with high solvent flow rates, which lead to an increase in operating costs.

One of the challenges observed is with temperature control along the column, where temperature gradients can occur which can cause a reduction in the efficiency of the absorption and regeneration itself, leading to an increase in operating costs.

Solvent regeneration is essential for the efficiency of the process, as it allows the solvent to be reused and reduces the amount of fresh solvent feed. However, it is in regeneration that the greatest energy costs are incurred, since the solvent must be heated to high temperatures, between 80 and 120 °C depending on the solvent, in order for CO₂ to be released. In regeneration, it is essential to use steam to promote contact with the solvent stream, which promotes the transfer of CO₂ into the steam stream that will later be obtained at the top of the regenerator, which is then condensed, and the CO₂-rich stream is obtained.

To address the limitations of traditional methods, research has focused on developing advanced CO₂ capture technologies. These innovations aim to enhance mass transfer rates, improve thermal efficiency, and reduce energy consumption. For instance, structured packing and novel materials have been introduced to increase the surface area for gas-liquid contact and promote better distribution. Additionally, alternative solvents with higher CO₂ absorption capacities and lower regeneration energies have been explored.

Some methods for CO₂ separation are known, such as the use of membranes, as illustrated in document US8246718B2, and adsorbents, as illustrated in document US8591627B2, for capturing CO₂ from gas streams.

To address the previously described problems, modifications to traditional methods have been developed.

Document US9713788B2 disclose the use non-aqueous amine scrubbing for the removal of carbon dioxide. In this method, CO₂ desorption occurs at temperatures below 100 °C, providing greater CO₂ sorption capacity compared to the same amine in aqueous solution, and reducing corrosivity. In this document, a method is described for separating CO₂ and/or H₂S from a mixed gas stream by contacting the gas stream with a non-aqueous, liquid absorbent medium of a primary and/or secondary aliphatic amine, preferably in a non-aqueous, polar, aprotic solvent under conditions sufficient for sorption of at least some of the CO₂. The solution containing the absorbed CO₂ can then be treated to desorb the acid gas. The method is usually operated as a continuous cyclic sorption-desorption process, with the sorption being carried out in a sorption zone where a circulating stream of the liquid absorbent contacts the gas stream to form a CO₂-rich sorbed solution, which is then cycled to a regeneration zone for desorption of the CO₂ (advantageously at < 100 °C). Upon CO₂ release, the regenerated lean solution can be recycled to the sorption tower. CO₂:(primary+secondary amine) adsorption molar ratios > 0.5:1 (approaching 1:1) may be achieved.

Document US7527775B2A discloses a process and a method for capturing CO₂ from a gaseous stream with an ionic liquid. The ionic liquid can be readily regenerated and recycled. In this document, it is disclosed a process and method for separating CO₂ from a gaseous stream such as natural gas. An ionic liquid comprising an anion having a carboxylate function and an effective amount of water is used as an adsorbent to selectively complex the CO₂ yielding a gaseous stream with a greatly reduced CO₂ content. The ionic liquid can then be readily regenerated and recycled.

Document US20110120309 discloses a process for the removal of acidic gases from a gas stream, involving contacting a wash solution stream with the gas stream to absorb the acidic gases, withdrawing the enriched wash solution at a first level, cooling the withdrawn solution, and reintroducing it upstream of the withdrawal point to form a mixed wash solution stream. The invention also pertains to systems for removing acidic gases from a gas stream. In this document, it is disclosed processes of removal of acidic gases from a gas stream, comprising the steps of a) contacting a wash solution stream with said gas stream containing acidic gases to be removed to allow absorption of the acidic gases into the wash solution stream; b) withdrawing wash solution enriched with acidic gases from said wash solution stream at a first withdrawal level; c) cooling said withdrawn wash solution; and d) reintroducing said cooled wash solution to the wash solution stream at a first reintroduction level to form a mixed wash solution stream, said first reintroduction level being upstream of said first withdrawal level. The present invention also relates to systems for removal of acidic gases from a gas stream.

Document US9555364B2 discloses a method for removing CO₂ using an absorbent which requires smaller amounts of heat. To improve the absorption rate of the absorbent which conventionally has a large CO₂ absorption capacity but shows a low absorption rate. In this document, it is disclosed novel compositions comprising substituted polyamines as acid gas scrubbing solutions and methods of using the compositions in an industrial system. The invention relates to the use of such polyamine compounds in industrial processes to remove acidic contaminants from natural and industrial fluid streams, such as natural gas, combustion gas, natural gas, synthesis gas, biogas, and other industrial fluid streams. The compositions and methods of the invention are useful for removal, absorption, or sequestration of acidic contaminants and sulfide contaminants including CO₂, H₂S, RSH, CS₂, COS, and SO₂.

### General Description

The present disclosure relates to a novel and improved method for the continuous carbon dioxide (CO₂) absorption and regeneration of the solvent. In a specific embodiment, this method can be used for separation of CO₂ from a flue gas stream using a liquid solvent, in particular, an aqueous solution of amines. The novel and improved method uses a novel reactor capable of overcoming mass and heat transfer limitations that normally constrain the physical and chemical absorption rate and the capacity to regenerate the solvent thus resulting in large equipment.

The disclosed method and reactor are intended for a continuous process for the absorption of carbon dioxide (CO₂) from gas streams and solvent regeneration using a plate-based absorber and regenerator system. The process is designed to enhance mass and heat transfer efficiency.

In one embodiment, the interfacial area between the liquid (solvent) and gaseous phases is created within the bidimensional meso/micro structured network plates, eliminating the need for bubble-cap trays, sieve trays, valve trays, and structured packing trays; preferably using a plate reactor, and more preferably a NetMIX reactor.

A plate reactor is a reactor where one or more physicochemical processes are carried out within regions delimited by successive plates contained within a stack of plates. Plate reactors comprising structured network flow plates, in a particular embodiment also known as "NetMIX", are for example advantageous in enabling simplified bidimensional shapes suitable for most mixing and reacting processes, in providing high contact surfaces, in having a high capability to extract heat and/or sustain pressure, and also in providing a simple and effective structure which is straightforwardly obtained by stacking successive plates.

In an embodiment, a gas stream containing CO₂ is mixed with a solvent stream inside a reactor comprising meso/micro mixing flow structured network plates and heat exchange plates, whereby the CO₂ is transferred to the solvent stream via an absorption process, also known as dissolution.

In an embodiment, a reactor for use in the present disclosed method is capable of increase mass transfer between the phases in absorption process at temperatures ranging from 15 °C to 55 °C, preferably from 20 °C to 50 °C, more preferably from 25 °C to 45 °C and pressures from 0.01 MPa to 0.5 MPa, preferably from 0.05 MPa to 0.3 MPa, more preferably from 0.05 to 0.2 MPa to allow the transfer of CO₂ from the gaseous stream to the liquid solvent, resulting in a saturated liquid solution.

In an embodiment, a reactor for use in the present disclosed method is capable of providing said saturated liquid solution with sufficient energy to allow the release of CO₂, and thus regeneration of the solvent, at temperatures ranging from 60 °C to 140 °C, preferably from 70 °C to 130 °C, more preferably from 80 °C to 120 °C., at a pressure of around from 0.01 MPa to 0.5 MPa, preferably from 0.10 MPa to 0.4 MPa, more preferably from 0.15 MPa to 0.3 MPa. In said embodiment, the reactor stack requires heat exchange plates where a high temperature thermal fluid is supplying the required heat.

In an embodiment, said heat exchange plates and the network plates are designed and assembled to promote high mass and heat transfer rates from the inside of the network plates, keeping the process temperature within the operational range at which absorption and desorption occur, and increase phase mixing. Temperatures outside these ranges hinders CO₂ absorption and solvent regeneration. Moreover, temperatures above 120 °C can lead to solvent degradation, depending on the solvent. This method overcomes the mass transfer limitations of the current state of the art. The method effectively reduces the size of the equipment.

The present disclosure relates to a method for continuous carbon dioxide absorption and solvent regeneration comprising the step of use of an aqueous solvent stream containing an amine, in co-current, within a plurality of reactors, so that it encounters a gas stream at the separation operating conditions, wherein each reactor of the plurality of reactors in series comprises at least one reaction fluid distributor network for flowing one or more reaction fluids, wherein said reaction fluid distributor network comprises an array of chambers, each chamber being interconnected by at least two channels to at least two other chambers.

In an embodiment, the method solves the above-mentioned technical difficulties by using an improved method for the continuous capture of CO₂ from a flue gas stream. It is therefore an objective of the present disclosure to provide a method with improved mixing, mass, and heat transfer rates using a new reactor, the design of which is also disclosed in the present disclosure. The disclosed reactor allows for an improved CO₂ absorption rate without the need for large equipment.

The method of the present disclosure can be easily scaled up from laboratory scale to industrial scale without compromising its intrinsic properties, such as mixing intensity, heat and mass transfer rates, absorption rates and overall productivity.

In one embodiment, the method of capturing CO₂ from a stream of flue gas comprises the following steps:
- Maintaining the reactor temperature at the desired temperature for the absorption process;
- Adding the gas stream to be treated at the reactor's temperature;
- Adding the aqueous solvent stream, in co-current so that it encounters the gas stream inside the reactor at the separation operating conditions;
- Exiting of the streams at the reactor outlet and routing them to a gas-liquid separator.
- Separation of the gaseous stream (stream with a lower concentration of CO₂) from the aqueous solvent stream (solvent saturated in CO₂);
- The aqueous solvent stream is heated and sent to a second reactor which must be heated to its operating conditions (solvent regeneration);
- Maintain the reactor at the adequate temperature and pressure to allow solvent's regeneration;
- At the outlet, the streams are sent to a gas-liquid separator to collect the gaseous stream concentrated in CO₂ and obtain the regenerated aqueous solvent stream;
- The regenerated aqueous solvent stream is then pump back into the first reactor to contact with fresh gaseous stream, allowing its recirculation.

Further steps may be necessary, depending on the final application of the method of the present invention, including condensation and separation of the water present in the final stream obtained, heat integration between numerous streams of the process and the need for make-up for the solvent stream.

In one embodiment, the aqueous solvent stream may be any aqueous solution containing amine in its composition. Said aqueous stream may contain monoethanolamine (MEA), diethanolamine (DEA), methyl diethanolamine (MDEA), piperazine (PZ), alone or a mixture thereof.

In one embodiment, the aqueous solvent stream may be any liquid solution in which there is a significant difference of solubility from CO₂ and the remaining components of the flue gas, namely N₂ or O₂.

In one embodiment, the gas stream to be treated must have carbon dioxide (CO₂) or hydrogen sulphide (H₂S) in its composition. The gas stream can have various compounds such as nitrogen (N₂), carbon monoxide (CO), oxygen (O₂), nitrogen dioxide (NO₂) and sulphur dioxide (SO₂), as well as other compounds.

In one embodiment, the solvent absorption takes place inside the reactor, at the interface where the aqueous and gaseous streams contact each other. Under the conditions of the present disclosure, the mixing between the phases is sufficiently intense to generate an interfacial surface area at high rates, to increase the CO₂ absorption rates in the aqueous phase.

In one embodiment, solvent regeneration processes takes place inside the reactor, in which the solvent flowing inside the network plates absorb heat from the adjacent heat exchange plates that constitute the reactor. Under the conditions of the present disclosure, the turbulence-like flow patterns created as the result of the geometry of the network plates increase the heat transfer capacity, and thus the efficiency of the regeneration process.

In one embodiment, the reactors are constructed by stacking several plates comprising at least (a) meso/micro structured grid plates and (b) heat exchange plates. The aqueous solvent flow and the gaseous flow encounter each other in the meso/micro structured grid plates, where CO₂ absorption takes place in the absorption phase and solvent regeneration takes place in the regeneration phase. The interior of the structured mesh plates is subject to the appropriate temperature and pressure conditions for each stage of the process. The temperature conditions depend essentially on the composition of the aqueous stream. For the absorption stage, the optimum conditions are from 15 °C to 55 °C, preferably from 20 °C to 50 °C, more preferably from 25 °C to 45 °C, and a pressure of 0.01 MPa to 0.5 MPa, preferably from 0.05 MPa to 0.3 MPa, more preferably from 0.05 to 0.2 MPa. The regeneration stage is endothermic, and energy must be supplied, operating at temperatures from 60 °C to 140 °C, preferably from 70 °C to 130 °C, more preferably from 80 °C to 120 °C, and a pressure from 0.01 MPa to 0.5 MPa, preferably from 0.10 MPa to 0.4 MPa, more preferably from 0.15 MPa to 0.3 MPa.

As a result of the absorption process, heat is released and transferred to the heat exchange plates. In the regeneration process, the process requires energy which is transferred from the heat exchange plates to the fluids allowing the release of CO₂ and consequently the regeneration of the solvent. In this way, a fluid passes through the heat exchange plates, which can be an oil that keeps the temperature on the plates constant.

In an embodiment, the meso/micro structured network plates may be a carved network of static mixing elements comprising of cylindrical chambers connected to each other in a bidimensional array through prismatic channels. The size of the network in both directions can be changed easily by increasing or decreasing the number of columns and rows that are part of the network, thus enabling easy upscaling of the reactor in terms of production rates and capture rate efficiency, without affecting the mixing properties of the network. Said properties are promoted by the impingement on each other of the high energy jets that enter in each chamber through at least two inlet channels, thus promoting strong flow instabilities and vortices, resulting in a chaotic and oscillatory flow regime that enhances mixing intensity and heat and mass transfer mechanisms. In particular, instabilities caused by multiphase flow in such network results in interfacial shear stresses that lead to a significant increase in interfacial surface area. The network in the structured network plates is fed through a number of inlet channels directly connected to the chambers of the first row. The number of inlet channels is equal to the number of columns in the network. Said inlet channels may be connected in the same direction or perpendicular to the direction of the flow of the streams. Aqueous solvent and gaseous streams are fed into the network through these inlet channels. Distribution plates may be required in the reactor to distribute the aqueous solvent and gaseous streams into multiple inlets to feed the inlet channels of the network. The resulting streams is removed from the network through the outlet channels connected to the chambers in the last row of the network. Said outlet channels may be connected in the same direction or perpendicular to the direction of the flow. The outlet channels may or may not converge into a smaller number of channels to transfer the streams to the exterior of the reactor. Heat exchange plates are stacked adjacent to the structured network plates. Said heat exchange plates comprises static elements to improve fluid flow distribution and to maximize heat transfer capacity.

In an embodiment, heat exchange plates may contain channels and/or vertically mounted rods to promote flow distribution and to distribute compressive stresses resulting from conditions in the structured network plates along the whole network of the reactor. The heating fluid can be any fluid capable of flowing at temperatures ranging from 25 to 120 °C, in liquid phase. Different fluids can be used, such as thermal oils or even water when it is not necessary to exceed 90 °C.

In an embodiment, the number of meso/micro structured network plates and heat exchange plates forming a stack can be increased to scale up production rates and the contact time, enabling the coupling of plates in parallel or series, as well as the increase or decrease of the number of plates in the stacking. Furthermore, the alternate stacking of high-pressure plates and low-pressure plates distributes the mechanical stresses along the direction perpendicular to the flow throughout all the plates. In this way, only the top and bottom plates require special attention regarding mechanical resistance to contain operational pressures. Additionally, the stacking of plates in which the flow is essentially bidimensional reduces the heat transfer resistance between the structured network plates and the heat exchange plates by reducing the distance between each stack of plates. The combination of the stacking of meso/micro structured network plates and heat exchange plates gives the reactor the capability to efficiently and continuously separate CO₂ from the flue gas streams are allowed to come into contact for a gas-liquid contact time ranging from 0.1 to 2 seconds.

In an embodiment, the reactor is engineered so that the network plates can operate at higher pressures. This capability significantly enhances the mass transfer rate by increasing the driving force, which in turn improves the CO₂ capture rate and overall efficiency of the process. By increasing the operational pressure, the solubility of CO₂ in the solvent is increased, promoting more effective absorption. Consequently, the increased mass transfer rates contribute to a more efficient separation of CO₂ from the gas stream, optimizing the performance and effectiveness of the entire capture process.

In an embodiment, gaseous stream obtained in regeneration using the disclosed method can be used for:
a) CO₂ storage (sequestration);
b) CO₂ conversion - CO₂ obtained is raw material for other processes namely thermocatalytically or electrochemically to produce CO₂ based materials or synthetic fuels.

In an embodiment, the present disclosure describes a method for capturing CO₂ in a continuous process comprising the following steps:
- Maintaining the reactor temperature at the desired temperature for absorption process;
- Adding the gas stream to be treated at the reactor temperature;
- Adding the aqueous solvent stream in co-current so that it encounters the gas stream at the separation operating conditions;
- Contact between the phases, reaction between CO₂ and aqueous solvent solution.
- Obtaining the streams at the reactor outlet and routing them to a gas-liquid separator.
- Separation of the gaseous stream (stream with a lower concentration of CO₂) from the aqueous solvent stream (solvent concentrated in CO₂);
- The aqueous solvent stream obtained in separator is heated and sent to a second reactor which must be heated to its operating conditions (solvent regeneration);
- Maintain the reactor at the adequate temperature and pressure for solvent's regeneration;
- At the outlet, the streams are sent to a gas-liquid separator to collect the gaseous stream concentrated in CO₂ and the obtain the regenerated aqueous solvent stream.

In an embodiment, the method further comprises one of the following steps: condensation and separation of the water present in the final stream obtained, heat exchange between various streams of the process and the need for make-up for the solvent stream.

In an embodiment, the operational temperature of the reactors ranges from 15 °C to 55 °C, preferably from 20 °C to 50 °C, more preferably from 25 °C to 45 °C and from 60 °C to 140 °C, preferably from 70 °C to 130 °C, more preferably from 80 °C to 120 °C, for absorption and regeneration process, respectively.

In an embodiment, the pressure is 0.01 MPa to 0.5 MPa, preferably from 0.05 MPa to 0.3 MPa, more preferably from 0.05 MPa to 0.2 MPa for absorption process and 0.01 MPa to 0.5 MPa, preferably from 0.10 MPa to 0.4 MPa, more preferably from 0.15 MPa to 0.3 MPa for regeneration process.

In an embodiment, the number of network plates in the stack is as such that the capture rate is at least 90%.

In an embodiment, the aqueous solvent and gaseous streams are introduced into the reactor at a ratio of gaseous:aqueous mass flow rate of from 5 to 30%, preferably 10%.

In an embodiment, the gaseous stream and the aqueous solvent stream are mixed in a chamber of the reactor at a Reynolds number of one of the inlet streams of at least 100 and local mixing times lower than 1 second.

In one embodiment, the aqueous solvent stream may be any liquid solution containing amine in its composition. Said aqueous stream may contain monoethanolamine (MEA), diethanolamine (DEA), methyl diethanolamine (MDEA), piperazine (PZ), alone or a mixture thereof.

In one embodiment, the aqueous solvent stream may be any liquid solution in which there is a significant difference of solubility from CO₂ and the remaining components of the flue gas, namely N₂ or O₂.

In one embodiment, the gas stream to be treated must have carbon dioxide (CO₂) or hydrogen sulphide (H₂S) in its composition. The gas stream can have various compounds such as nitrogen (N₂), carbon monoxide (CO), oxygen (O₂), nitrogen dioxide (NO₂) and sulphur dioxide (SO₂), as well as other compounds.

In an embodiment, the reactor is an array of static mixing elements comprising chambers, preferably a series of interconnected static mixing elements.

In an embodiment, the reactor comprises:
a stack of a network mixer plate for performing the mixing and a heat exchange plate, wherein the network mixer plate comprises an array of static mixing elements comprising chambers, wherein each chamber being interconnected by at least two channels to at least two other chambers, for mixing and dividing one or more flow stream sequentially through said chambers,
wherein the heat exchange plate comprises one or an assemble of channels, preferably having an array of vertically mounted rods, for the flow of a cooling liquid,
wherein the channel of the heat exchanger plate and the chambers of the network mixer plate are lined up to transfer heat between said chambers and said channel,
wherein each chamber of the network mixer plate is a spherical or cylindrical chamber, comprising at least two or three channels and at least two or three apertures for connection to said channels.

It is also disclosed the use of the method in capturing of gas, storing of gas and utilization.

### Brief Description of the Drawings

The following figures provide preferred embodiments for illustrating the description and should not be seen as limiting the scope of invention.
**Figure 1** shows the stacking of the plates of the (**1**) reactor for continuous gas absorption and solvent regeneration: (**3**) two heat exchange plates, (**4**) one structured network plate and (**2**) two closing plates. These stacking of the plates is a representation of co-current injection configuration with two inlets.
**Figure 2** shows the meso/micro structured network plate comprising a carved network of (**10**) cylindrical chambers, (**11**) prismatic channels, (**12** and **13**) inlet and outlet channels.
**Figure 3** is a process flow diagram for the method of CO₂ separation using solvent.
**Figure 4** shows experimental evidence obtained from the example pressure, temperature, flowrate and concentration plots.
**Figure 5** is a representation of the premixed injection of liquid and gas streams into the reactor.
**Figure 6** is a representation of counter-current injection configuration with two inlets.

### Detailed Description

The present disclosure relates to a novel and improved method for the continuous carbon dioxide (CO₂) absorption and solvent regeneration. The novel and improved method utilizes a novel reactor capable of overcoming mass and heat transfer limitations that normally constrain the absorption rate and the capacity to regenerate the solvent, thus resulting in large equipment.

As explained above, current methods for CO₂ capture using aqueous solvents such as amines, present some challenges, namely technical and logistical. Difficulties in transferring carbon dioxide from flue gas to the amine due to poor mass transfer rates, high energy demands and the need for large facilities are some of difficulties presented by conventional separation methods. Therefore, there is a need for an improved method.

In an embodiment, the method increases the rate of CO₂ absorption in the solvent through conditions that allow the method of the present disclosure to enhance mass and heat transfer.

In an embodiment, the method is carried out in a reactor built by stacking at least two types of plates: meso/micro structured plates comprising a network of static mixing elements, where the absorption and regeneration occurs and where heat is absorbed or released; and heat exchange plates that release/absorb heat from the structured network plates thus keeping its temperature within the range of operational temperatures.

In an embodiment, the reactor comprises plates in which an aqueous solvent stream and a gaseous stream are fed into the reactor through the meso/micro structured plates. The gas absorption and solvent regeneration processes are exothermic and endothermic, respectively. As such, a thermal fluid must be fed to the heat exchange plates to absorb/release the heat released/absorbed in the structured network plates.

In an embodiment, the method for the continuous CO₂ capture comprises the following steps:
- Maintaining the reactor temperature at the desired temperature for absorption process;
- Adding the gas stream to be treated at the reactor temperature;
- Adding the aqueous solvent stream in co-current so that it encounters the gas stream at the separation operating conditions;
- Obtaining the streams at the reactor outlet and routing them to a gas-liquid separator.
- Separation of the gaseous stream (stream with a lower concentration of CO₂) from the aqueous solvent stream (solvent concentrated in CO₂);
- The aqueous solvent stream is heated and sent to a second reactor which must be heated to its operating conditions (solvent regeneration);
- Maintain the reactor at the right temperature and pressure for solvent's regeneration;
- At the outlet, the streams are sent to a gas-liquid separator to collect the gaseous stream concentrated in CO₂ and obtain the regenerated aqueous solvent stream.

In one embodiment, the aqueous solvent stream may be any liquid solution containing amine in its composition. Said aqueous solvent stream may contain monoethanolamine (MEA), diethanolamine (DEA), methyl diethanolamine (MDEA), piperazine (PZ), alone or a mixture thereof. The temperature of the aqueous solvent stream is heated or decreased by passing this stream through the cold or hot side of a conventional heat exchanging device, such as a shell-and-tube heat exchanger or plates heat exchanger.

In one embodiment, the aqueous solvent stream may be any liquid solution in which there is a significant difference of solubility from CO₂ and the remaining components of the flue gas, namely N₂ or O₂.

In an embodiment, the heat exchange operates counter-currently for a more efficient operation. The aqueous stream is then pumped into the reactors at the operational pressure conditions, using a conventional centrifugal pump or positive displacement pumps such as diaphragm pump or screw pump.

In one embodiment, the gas stream to be treated must have carbon dioxide (CO₂) or hydrogen sulphide (H₂S) in its composition. The gas stream can have various compounds such as nitrogen (N₂), carbon monoxide (CO), oxygen (O₂), nitrogen dioxide (NO₂) and sulphur dioxide (SO₂), as well as other compounds.

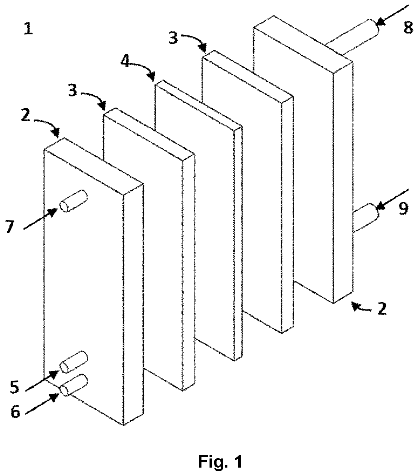

In an embodiment, as Figure 1 illustrates, the reactors comprise the stacking of plates. The embodiment from Figure 1 comprises a stacking of plates (1), delimited by closing plates (2) for compression, and two heat exchange plates (3) intercalated by one network plate (4). The closing plates are required to withstand the mechanical stresses due to the pressure in the structured network plates. The top closing plate comprises inlets for the gaseous (5) and aqueous streams (6), and one for outlet stream (7). The bottom closing plate comprises one or more inlets for the flow of thermal fluid (8) and one or more outlets for the flow of thermal fluid (9). In Figure 1, the thermal fluid is flowing in counter-current with the gaseous and aqueous streams. The structured network plates contain static mixing elements to promote mixing, to enhance heat and mass transfer rates.

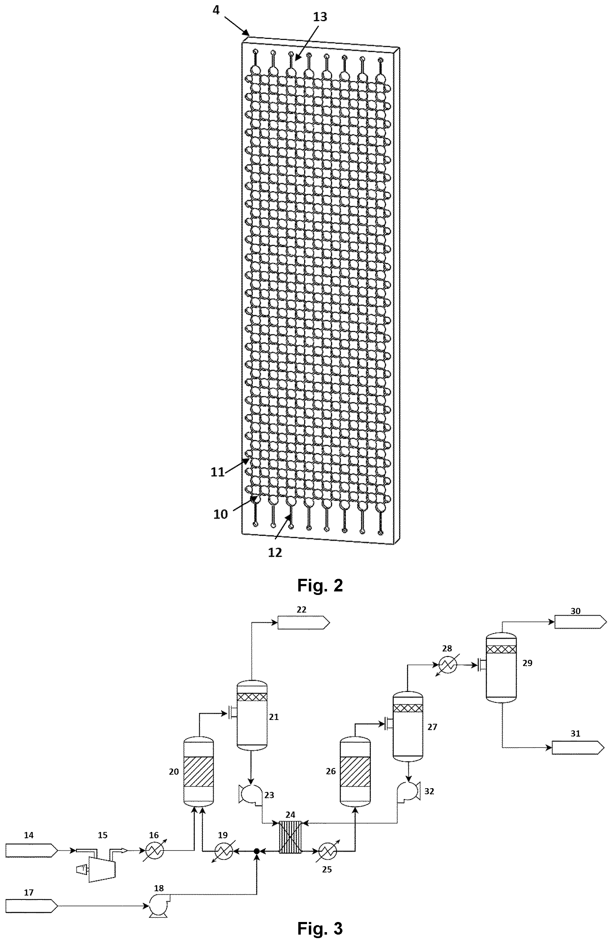

In an embodiment, as illustrated in Figure 2, the static mixing elements can be a network of cylindrical channels and prismatic chambers connected to each other in a bidimensional network, carved into the plates. The plates are made from a mechanically resistant material such as stainless steel or other metallic alloys. The network of chambers and channels are characterized by the number of rows nₓ in the direction of the flow, and number of columns n_{y} in the direction normal to the flow. In the embodiment illustrated in Figure 2, the number of rows nₓ is 49 and the number of columns n_{y} is 8. The size of the network in both directions is easily adaptable by increasing or decreasing the number of chambers and channels, i.e., increasing or decreasing the number of rows and columns. This versatility allows a precise control of the contact time between the gaseous and the aqueous solvent streams, as well as in terms of productivity, without affecting the mixing properties of the network. The chambers are characterized by a characteristic diameter Dc, and the channels are characterized by a width d, a length I and a depth ω. The depth of the channels and chambers is the same and is equal to ω.

In an embodiment, to maximize the mixing intensity in the chambers of the structured network, the ratio of the chamber diameter to the channel width is preferably 6 to 7. The ratio of the channel width to the channel depth should preferably be as high as possible, preferably 1 to 3. The mixing properties inside the chambers of the meso/micro structured network is due to the high energy jets from the two inlet channels of each chamber. The high energy jets impinge upon the chambers, promoting flow instability with periodic and chaotic characteristics that results in an intense mixing. However, there is a minimum amount of energy that the jets preferably possess in order to promote mixing. This energy is characterized by the channel's Reynolds number, defined as Re = *pvd*/*µ*, where *ρ* and *µ* are the fluids density and viscosity, respectively, *v* is the velocity in the channel, and d is the channel's hydraulic diameter. For better results, the Reynolds number Re is larger than 100, preferably larger than 150. In addition to intense mixing, operating at these conditions of Reynolds number also have a positive impact on the increase of heat and interfacial mass transfer rates. Instabilities caused by multiphase flow in such network results in interfacial shear stresses that lead to a significant increase of interfacial surface area. The network from Figure 2 is built from repetition of cylindrical chambers (10), and prismatic channels (11). The aqueous solvent stream and gaseous stream enter the network static mixer plates through inlet injection channels (12) that are connected to the mixing chambers of the first row of the network of said chambers and channels. The streams enter said network in different injection schemes, intercalated or not.

In an embodiment, as illustrated in Figure 2, the network size is nₓ = 49 and n_{y} = 8. The number of inlet channels is the same as the number of network columns n_{y}. Said inlet channels may be connected in the same direction or perpendicular to the direction of the flow. In Figure 2, said inlet channels are oriented in the same direction as the flow. Moreover, aqueous solvent and gaseous streams can be premixed prior to entering the network static mixer plates, being its flow equally or not divided through the number of rows of the network of mixing chambers and channels. The outlet stream exits the network plates through similar injection channels (13) through n_{y} channels.

In an embodiment, the heat exchange plates are stacked adjacent to the structured network plates. Several combinations of structured network plates and heat exchange plates can be used. For better results, one structured network plate is surrounded by one heat exchange plate on each side to maximize heat transfer rates. Heat exchange plates contain static elements to improve fluid flow distribution and to maximize heat transfer capacity.

In an embodiment, heat exchange plates comprise channels and/or vertically mounted rods to promote flow distribution. A cooling fluid flows inside the heat exchange plates to absorb/release the heat released/absorbed by the adjacent structured network plates during CO₂ absorption or release.

In an embodiment, distribution or collecting plates may or may not be installed in the reactor to distribute both aqueous solvent and gaseous stream into multiple inlets to feed the inlet channels and the network, or to collect the streams into a single connection. These are installed at the top and beginning of the stacking.

The use of a stacking of meso/micro structured network plates and heat exchange plates makes it easier to scale up the process. The coupling of plates can be in parallel or series. The number of plates in the stack can be increased or decreased.

The disclosed method is used in several applications. The following examples are offered by way of illustration purposes only and not as a limitation.

### EXAMPLE 1: Continuous CO₂ capture process.

A preferred embodiment of the invention is illustrated by the process defined in the flowchart of Figure 3. A gaseous stream (14), with a flow rate of 0.50 and 0.6 kg/h, from an industrial process or simulated using a gas cylinder containing 15% CO₂ together with other components such as N₂, O₂, CO and impurities is pressurized by a turbine (15) at 3 bar and cooled in a heat exchanger (16) at 40 °C to the operating conditions before being introduced into the absorber.

The aqueous solvent (17) is a solution that contain an amine, preferably 30 %wt. MEA (MDEA or PZ, individually or in combinations, can be used). A flow rate of 5 kg/h of solvent is pressurized by a pump (18) at 3 bar and cool in a heat exchanger (19) at 40 °C before entering in absorber.

The streams are introduced in absorbing reactor (20) in co-current. A thermal fluid, in this case water, is directed through thermal plates within the absorber to maintain the absorber temperature at 40 °C. The absorbing reactor comprises three plates. The central plate features a network of chambers and channels, comprising a structure with 144 rows and 8 columns of chambers with the following dimensions: D (chamber diameter) - 3.38 mm, Dₗₐₜₑᵣₐₗ (lateral chamber diameter) - 2.39 mm, d (channel width) - 0.5 mm, w (network depth) - 1 mm, and L (center-to-center distance) - 4.38 mm. This geometry promotes efficient gas-liquid mixing and high mass transfer rates, with experimental conditions yielding a Reynolds number in liquid of 167 and Reynolds number in gas of 639 and 766, respectively and mass transfer coefficients (K_{g}a) ranging from 5 to 20 s⁻¹, significantly higher than those observed in traditional absorption columns.

At the absorbing reactor outlet, the stream is directed to a gas-liquid separator (21). The top of the gas-liquid separator yields a gas stream (22) rich in nitrogen (N₂ concentration above 95%), while the bottom produces a liquid stream saturated with CO₂. This liquid stream is pumped (23) to the regenerator (26) to maintain the separator level.

Before entering the regenerating reactor (26), the liquid undergoes heat exchanger (24) with another process stream and is then heated (25) to the process temperature of 120 °C. The regeneration temperature can be lower if using alternative amines. The regenerating reactor also comprises three plates with identical chamber and channel dimensions as the absorbing reactor. Thermal oil at 120 °C circulates through intercalated plates, providing the necessary energy for solvent regeneration.

At the regenerating reactor's outlet, the stream is sent to another gas-liquid separator (27), where CO₂ is separated at the top (purity above 90%). This stream is cooled (28) to condense the water vapor generated during regeneration, and the condensed water (31) is separated in a subsequent gas-liquid separator (29). The CO₂ stream is collected at the top of separator (29). The bottom of the separator (27) produces an amine stream with a low CO₂ concentration, which is pumped (32) back into the first reactor, pre-cooled by the previously described heat exchanger (24) and mixed with the aqueous stream.

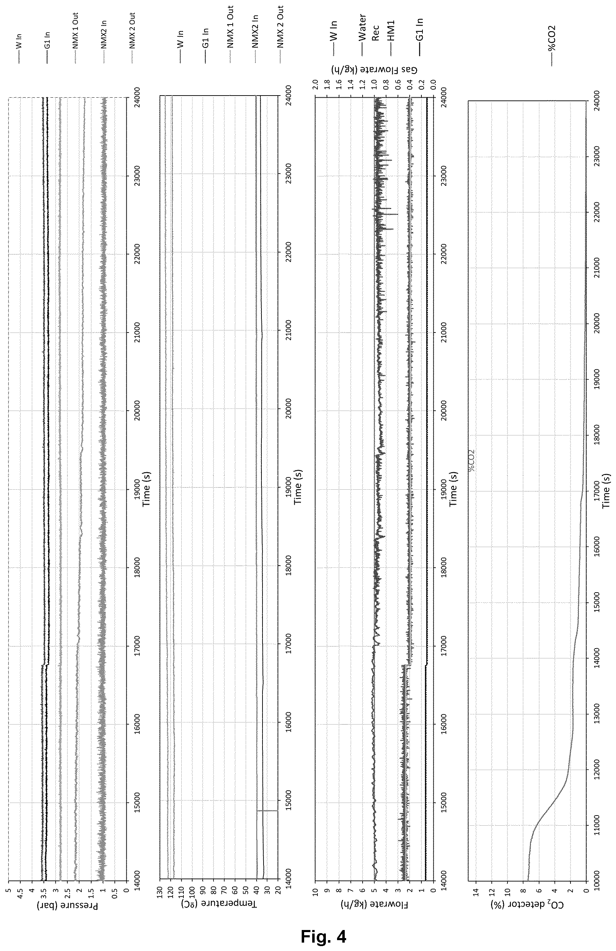

Figure 4 shows the telemetry obtained from the prototype under the conditions mentioned in the example above. The telemetry includes the pressures, temperatures, and flow rates of the main process streams, as well as the CO₂ concentration in stream 22 exiting separator 21. It is observed that for lower gas flow rates (0.5 kg/h), the CO₂ concentration in stream 22 decreases, indicating a higher capture rate assuming all other conditions are equal.

In table 1 are represented some experimental results in prototype for different gaseous flow rate. Capture rate is the efficiency of the process, means the quotient between the quantity of CO₂ obtained in outlet stream per the quantity of CO₂ introduced in the inlet stream. The other information refers to the overall mass transfer coefficients and the concentration of N₂ species after the absorption separator, known as stream 22. The overall mass transfer coefficient is crucial for evaluating the efficiency of the mixing process compared to conventional methods, which typically achieve a rate up to 1 s⁻¹.

**Table 1 - experimental results from some experiments carried out.**

| Water Flowrate (kg/h) | Gas Flowrate (kg/h) | Capture Rate (%) | K_{g}a (s⁻¹) | N₂ concentration at outlet stream (%) |
|---|---|---|---|---|
| 5 | 0.50 | 99.9 | 15.5 | ~100.0% |
| 5 | 0.75 | 97.4 | 6.2 | 99.6 |
| 5 | 1.00 | 84.0 | 6.7 | 97.2 |

### EXAMPLE 2: Continuous CO₂ capture process with pre-mixture.

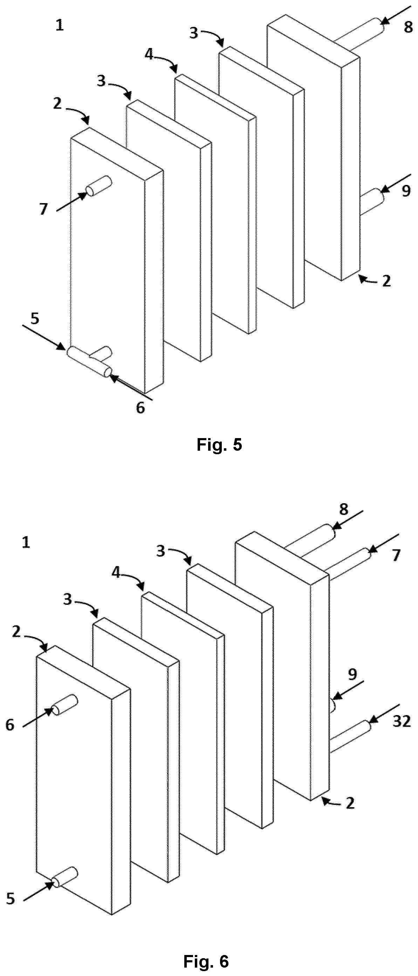

In an embodiment of the disclosed method for capturing CO₂ using an amine solvent, as illustrated in Figure 5, the gaseous stream (5) and the aqueous solvent solution stream (6) are combined in a mixing union prior to entering the absorber. This pre-mixing step ensures thorough contact between the gas and liquid phases, promoting efficient mass transfer and enhancing the overall absorption process within the absorber.

### EXAMPLE 3: Continuous CO₂ capture process in counter current.

In an alternative embodiment, the gaseous and aqueous solvent feed in the plate absorber could be performed in a counter current manner to optimize the efficiency of mass transfer between the gas and liquid.

In this embodiment, as illustrated in Figure 6, the absorbing reactor has two inlets and two outlets. The aqueous solvent solution (6) would be introduced at the upper inlet, while the gaseous stream (5) to be treated would be inserted at the lower inlet. The counter current gas-liquid contact would enable a more efficient mass transfer since the thermodynamic equilibrium would be constantly shifting, thereby providing a greater driving force for the dissolution process. With this configuration, it is possible to recover the treated gas stream at the upper outlet (7) and the stream containing (32) the absorbed CO₂ at the lower outlet of the reactor. This allows a more effective continuous capture, contributing for the optimization of the absorption process. Furthermore, counter current operation would offer additional advantages, such as better utilization of the reagent and a more uniform distribution of components throughout the reactor, resulting in a more complete and efficient absorption of CO₂ and other contaminants present in the gas, without the need for an additional separator in the process.

## Claims

1. Method for continuous carbon dioxide absorption and solvent regeneration comprising the step of use of an aqueous solvent stream containing an amine, in co-current, within a plurality of reactors, so that it encounters a gas stream at the separation operating conditions,
wherein each reactor of the plurality of reactors in series comprises at least one reaction fluid distributor network for flowing one or more reaction fluids,
wherein said reaction fluid distributor network comprises an array of chambers, each chamber being interconnected by at least two channels to at least two other chambers.

2. Method for continuous carbon dioxide absorption and solvent regeneration according to the previous claim, comprising the following steps:
maintaining a first reactor with a temperature for the absorption process;
adding the gas stream to be treated at the reactor's temperature;
adding an aqueous solvent stream, in co-current so that it encounters the gas stream inside the reactor at the separation operating conditions;
exiting of the streams at the first reactor outlet and routing them to a gas-liquid separator;
separating the gaseous stream from the aqueous solvent stream;
heating the aqueous solvent stream and send to a second reactor which is heated to its operating conditions;
maintaining the second reactor at the adequate temperature and pressure to allow solvent's regeneration;
at the second reactor outlet, the streams are sent to a gas-liquid separator to collect the gaseous stream concentrated in CO₂ and obtain the regenerated aqueous solvent stream;
pumping the regenerated aqueous solvent stream back into the first reactor to contact with fresh gaseous stream, allowing its recirculation;
wherein the reactor comprises at least one reaction fluid distributor network for flowing one or more reaction fluids, wherein said reaction fluid distributor network comprises an array of chambers, each chamber being interconnected by at least two channels to at least two other chambers.

3. Method according to the previous claim, further comprising at least one of the following steps:
condensation and separation of the water present in the final stream obtained;
heat integration between numerous streams of the process;
make-up for the solvent stream.

4. Method according to any of the previous claims, wherein the aqueous solvent stream is selected from a list consisting of any liquid solution in which there is a significant difference of solubility from CO₂ and the remaining components of the flue gas, namely N₂ or O₂, monoethanolamine (MEA), diethanolamine (DEA), methyl diethanolamine (MDEA), piperazine (PZ), and their combinations thereof.

5. Method according to any of the previous claims, wherein the gas stream is selected from a list consisting of carbon dioxide, hydrogen sulphide, nitrogen, carbon monoxide, oxygen, nitrogen dioxide, sulphur dioxide (SO₂), and their combinations thereof.

6. Method according to any of the previous claims, wherein the at least two channels comprise a prismatic configuration in micro or meso dimensions.

7. Method according to any of the previous claims, wherein the reactor comprises at least one gasket or at least one insulating layer.

8. Method according to any of the previous claims, wherein the pressure in the first reactor ranges from 0.01 MPa to 0.5 MPa, preferably from 0.05 MPa to 0.3 MPa, more preferably from 0.05 MPa to 0.2 MPa and/or wherein the pressure in the second reactor ranges from 0.01 MPa to 0.5 MPa, preferably from 0.10 MPa to 0.4 MPa, more preferably from 0.15 MPa to 0.3 MPa.

9. Method according to any of the previous claims, wherein the reactor comprises heat exchanger plates that are adjacent to the reaction fluid distributor network plates.

10. Method according to any of the previous claims, wherein the temperature in the first reactor ranges from 15 °C to 55 °C, preferably from 20 °C to 50 °C, more preferably from 25 °C to 45 °C and/or wherein the temperature in the second reactor ranges from 60 °C to 140 °C, preferably from 70 °C to 130 °C, more preferably from 80 °C to 120 °C.

11. Method according to any of the previous claims, wherein the number of network plates in the stack is as such that the capture rate is at least 90%.

12. Method according to any of the previous claims, where the aqueous solvent and gaseous streams are introduced into the reactor at a ratio of gaseous:aqueous mass flow rate of from 5 to 30%, preferably 10%.

13. Method according to any of the previous claims, wherein the reactor comprises high energy jets for the introduction of the aqueous solution and the CO₂ streams.

14. Method according to any of the previous claims, the gaseous stream and the aqueous stream are mixed in a chamber of the reactor at a Reynolds number of one of the inlet streams of at least 100 and local mixing times lower than 1 second.

15. Use of the method described in any of the previous claims in capturing of gas, storing of gas and utilization.
